Europäisches Patentamt

European Patent Office

Office européen des brevets

(11) Veröffentlichungsnummer: **0 422 532 B1**

## (12) EUROPÄISCHE PATENTSCHRIFT

(45) Veröffentlichungstag der Patentschrift: **10.08.94**

(21) Anmeldenummer: **90119201.3**

(22) Anmeldetag: **06.10.90**

(51) Int. Cl.⁵: **C08F 220/18**, C09D 133/08, C09D 5/00

(54) Bindemittel für wasserverdünnbare Beschichtungsmaterialien, vorwiegend für mineralische und bituminöse Untergründe, und Verfahren zur Herstellung dieser Bindemittel.

(30) Priorität: **12.10.89 AT 2349/89**

(43) Veröffentlichungstag der Anmeldung:
**17.04.91 Patentblatt 91/16**

(45) Bekanntmachung des Hinweises auf die
Patenterteilung:
**10.08.94 Patentblatt 94/32**

(84) Benannte Vertragsstaaten:
**BE CH DE DK ES FR GB GR IT LI NL SE**

(56) Entgegenhaltungen:
**DE-A- 2 122 313**
**DE-A- 2 208 255**
**FR-A- 2 235 958**

(73) Patentinhaber: **Vianova Kunstharz Aktiengesellschaft
Bundesstrasse 175
A-8402 Werndorf(AT)**

(72) Erfinder: **Kriessmann, Ingo, Dr.
Hilmteichstrasse 75
A-8010 Graz(AT)**
Erfinder: **Gossak, Kurt
Wöbling 31
A-8042 Graz(AT)**
Erfinder: **Klintschar, Gerfried, Dr.
Rieshang 20
A-8010 Graz(AT)**
Erfinder: **Burkl, Julius
Peter Roseggerstrasse 38 a
A-8053 Graz(AT)**

**Beschreibung**

Die Erfindung betrifft Bindemittel auf der Basis von wäßrigen Acrylatcopolymerdispersionen für Beschichtungsmittel, vorwiegend für mineralische und bituminöse Untergründe. Insbesonders sind die Bindemittel zur Formulierung von höherpigmentierten Straßenmarkierungsfarben geeignet.

Wäßrige Kunststoffdispersionen zur Formulierung von Straßenmarkierungsfarben sind aus der Literatur bekannt und werden auch in der Praxis eingesetzt.

So werden gemäß der EP-A1-0 066 108 für diesen Zweck Mischungen von Reinacrylatdispersionen und Dispersionen von Carboxylgruppen enthaltenden Styrol-Dibutylfumarat-Copolymeren, die durch einen Zusatz von Polypropylenimin chemisch vernetzt werden, vorgeschlagen. Gegenüber wäßrigen Dispersionen, wie sie in der DE-PS-12 32 871 oder der US-PS-3,940,385 beschrieben sind, zeigen diese Produkte bei der Verwendung für Dünnschichtmarkierungen vorteilhafte Eigenschaften. Die Produkte der EP-A1-00 66 108 stellen jedoch Zweikomponentensysteme mit einer begrenzten Topfzeit dar. Überdies ist das eingesetzte Polypropylenimin in Hinsicht auf seine Toxizität bedenklich.

Aus der EP-A1-0 133 949 und der AT-PS-380 482 sind wasserverdünnbare Beschichtungsmittel für mineralische und bituminöse Untergründe bekannt, die durch Emulgierung einer Lösung von physikalisch trocknenden organischen Polymeren in organischen Lösemitteln mit Hilfe von durch Salzbildung wasserlöslich gemachten Harzen erhalten werden. Diese Produkte benötigen den Zusatz von Weichmachern und weisen einen nicht unwesentlichen Anteil an organischen Lösemitteln auf. Außerdem erlauben die genannten Produkte nur die Formulierung von niederpigmentierten Lacken.

In der EP-A-200 249 werden Straßenmarkierungsfarben auf der Basis von wäßrigen Lösungen von Styrol-Acrylatcopolymeren beschrieben, die durch einen Zusatz von wasserlöslichen Salzen, wie Natriumchlorid, Calciumchlorid oder Zinkacetat - nach dem Auftrag auf die Straße - koaguliert werden. Abgesehen vom umweltschädigenden Einsatz der Salze, gestatten auch die in dieser Literaturstelle angegebenen Polymerzusammensetzungen ohne eine erfinderische Auswahl der Monomeren nicht die Formulierung von weichmacherfreien und hochpigmentierten Lacken mit zufriedenstellenden Filmeigenschaften.

Es wurde nun gefunden, daß bei einer spezifischen Auswahl der eingesetzten Monomeren wäßrige Dispersionen erhalten werden, die als Bindemittel, insbesonders für Straßenmarkierungsfarben, dienen können. Sie weisen nicht die Nachteile der Produkte des Standes der Technik auf und gestatten die Formulierung höherpigmentierter Lacke mit guten Applikations- und Filmeigenschaften.

Die Erfindung betrifft demgemäß Bindemittel auf der Basis von Acrylatcopolymerdispersionen für Beschichtungsmaterialien, vorwiegend für mineralische oder bituminöse Untergründe, insbesonders für Straßenmarkierungsfarben, welche dadurch gekennzeichnet sind, daß die Copolymeren eine Monomerenzusammensetzung von

(a) 40 bis 67 Gew.-%, Ethylacrylat und n-Butylacrylat in einem Verhältnis von 3,5 : 1 bis 1 : 2,5

(b) 5 bis 20 Gew.-%, Hydroxyalkylacrylate und/oder (Meth)acrylamid

(c) 3 bis 5 Gew.-%, (Meth)acrylsäure

(d) 10 bis 15 Gew.-%, Methylmethacrylat und/oder $C_1$-$C_{10}$-Alkylester der Malein- oder Fumarsäure

(e) 15 bis 30 Gew.-% mit den Monomeren (a) bis (d) copolymerisierbare Vinylmonomere, vorzugsweise Styrol,

aufweisen, wobei die Summe der Prozentzahlen der Komponenten (a) bis (e) 100 ergeben muß und die Copolymeren eine berechnete Glasübergangstemperatur zwischen -20°C und +30°C, vorzugsweise zwischen -10°C und +20°C, haben.

Die Erfindung betrifft weiterhin die Herstellung der Bindemittel durch Emulsionspolymerisation von Monomerenmischungen der oben gegebenen Zusammensetzung, sowie die Verwendung der Bindemittel zur Formulierung von Beschichtungsmitteln für mineralische und bituminöse Untergründe, insbesonders von Straßenmarkierungsfarben.

Die erfindungsgemäßen Bindemittel erlauben auch die Formulierung von höherpigmentierten Lacken, d.h. von Lacken mit einem Pigment-Bindemittel-Verhältnis von 2:1 bis zu 10:1. Die daraus hergestellten Überzüge weisen auch bei hoher Pigmentierung gute mechanische Eigenschaften, sowie eine gute Abriebfestigkeit und eine geringe Schmutzaufnahme auf. Aufgrund ihrer Eigenschaften können die hochpigmentierten Lacke auch als "Füllgrund" für andere Untergründe dienen.

Von besonderem Vorteil ist der geringe Anteil an organischen Lösemitteln von höchstens 2 %, bezogen auf den gebrauchsfertigen Lack, sowie das Fehlen von Weichmachern, die speziell bei bituminösen Untergründen zum Vergrauen der Markierungsstreifen führen. Es wird angenommen, daß das günstige Verhalten der erfindungsgemäßen Copolymerdispersionen insbesonders auf die Verwendung von Ethylacrylat und Butylacrylat als wesentliche Bestandteile zurückzuführen ist.

Die erfindungsgemäßen Copolymerdispersionen werden in bekannter Weise durch Emulsionspolymerisation hergestellt. Die Monomerenzusammensetzung liegt innerhalb folgender Bereiche:

(a) 40 bis 67 Gew.-%, Ethylacrylat und n-Butylacrylat in einem Verhältnis von 3,5 : 1 bis 1 : 2,5

(b) 5 bis 20 Gew.-%, Hydroxyalkylacrylate und/oder (Meth)acrylamid

(c) 3 bis 5 Gew.-%, (Meth)acrylsäure

(d) 10 bis 15 Gew.-%, Methylmethacrylat und/oder $C_1$-$C_{10}$-Alkylester der Malein- oder Fumarsäure

(e) 15 bis 30 Gew.-% mit den Monomeren (a) bis (d) copolymerisierbare Vinylmonomere, vorzugsweise Styrol,

wobei die Summe der Prozentzahlen der Komponenten (a) bis (e) 100 ergeben muß.

Anstelle von Styrol können auch andere Vinylmonomere, wie Ester des Vinylalkohols, Vinylpyrrolidon oder weitere (Meth)acrylmonomere, eingesetzt werden.

Bevorzugt für die Fomulierung von Straßenmarkierfarben sind Copolymerdispersionen, die unter Verwendung von

15 - 25 Gew.-% Ethylacrylat,

25 - 35 Gew.-% n-Butylacrylat,

5 - 10 Gew.-% 2-Hydroxyethylacrylat und/oder Acrylamid,

3 - 5 Gew.-% Acrylsäure,

10 - 15 Gew.-% Methylmethacrylat und

20 - 30 Gew.-% Styrol

hergestellt wurden, wobei die Summe der Prozentzahlen der Komponenten 100 ergeben muß und die Copolymeren eine berechnete Glasübergangstemperatur zwischen 0 und +10°C aufweisen.

Die folgenden Beispiele erläutern die Erfindung. Alle Angaben in Teilen und Prozenten beziehen sich, soferne nichts anderes angegeben ist, auf Gewichtseinheiten.

Beispiele 1 - 8: In einem für die Emulsionspolymerisation geeigneten Reaktor werden 50 Tle deionisiertes Wasser sowie 40 Tle einer Flotte bestehend aus 100 Tlen deionisiertem Wasser, 100 Tlen der in der Tab. 1 angegebenen Monomerenmischung, 0,5 Tlen eines mit 30 Mol Ethylenoxid polyethoxylierten Nonylphenols, 1 Tl Dodecylsulfonat, 0,2 Tlen tert.-Dodecylmercaptan und 1 Tl Ammoniumperoxodisulfat auf 85°C erwärmt. Die verbleibenden 162,7 Tle der Flotte werden aus einem mit Rührer versehenen Zugabegefäß innerhalb 2 Stunden gleichmäßig zugegeben. Der theoretische Feststoffgehalt von 40 % ist nach einer Nachreaktionszeit von 2 Stunden erreicht. Der Ansatz wird auf 25°C gekühlt und mit einer 10%igen wäßrigen Ammoniaklösung auf einen pH-Wert von 7,0 bis 8,0 eingestellt. Die Werte für die berechneten Glasübergangtemperaturen können der Tab. 1 entnommen werden.

TABELLE 1

| Beispiel | EA | BA | HE | AA | AS | MM | ST | Tg (ber.) °C |
|---|---|---|---|---|---|---|---|---|
| 1 | 25 | 27 | -- | 5 | 4 | 11 | 28 | + 13 |
| 2 | 25 | 25 | 15 | -- | 4 | 10 | 21 | + 7,5 |
| 3 | 25 | 28 | 5 | 5 | 4 | 10 | 23 | + 11 |
| 4 | 25 | 37 | 5 | -- | 4 | 10 | 19 | - 4 |
| 5 | 15 | 35 | 5 | -- | 3 | 13 | 29 | + 9 |
| 6 | 20 | 32 | 5 | -- | 4 | 12 | 27 | + 8 |
| 7 | 35 | 20 | 5 | -- | 3 | 13 | 24 | + 11 |
| 8 | 45 | 13 | 5 | -- | 5 | 11 | 21 | + 11 |

EA Ethylacrylate BA n-Butylacrylat HE 2-Hydroxyethylacrylat AA Acrylamid AS Acrylsäure MM Methylmethacrylat ST Styrol Tg Glasübergangstemperatur

Prüfung der Bindemittel

Aus den Bindemitteln entsprechend den Beispielen wurden Straßenmarkierungsfarben nach folgender Rezeptur hergestellt:

(a) 200 Gew.-Tle Bindemittel, 40%ig

 5 Gew.-Tle Netzmittel (Alkylammoniumsalz dimerer Fettsäuren)

 4 Gew.-Tle Entschäumer (Wachs-Mineralölbasis, silikonfrei)

 7 Gew.-Tle 2,2,4-Trimethyl-1,3-pentandiolmonoisobutyrat

(b) 100 Gew.-Tle Titandioxid

 250 Gew.-Tle Calciumcarbonatfüllstoff (Korngröße ca. 5 $\mu$m)

 50 Gew.-Tle Talkumfüllstoff (Korngröße ca. 15 $\mu$m)

(c) 3 Gew.-Tle Konservierungsmittel (Formaldehyddepotverbindungen)

 50 Gew.-Tle Bindemittel, 40%ig

Die Mischung aus Teil (a) wurde mit dem Pigment und den Füllstoffen (b) dispergiert und der Ansatz mit (c) komplettiert. Die Farben werden mit Wasser auf Verarbeitungsviskosität eingestellt und auf Asbestzementplatten bzw. einem stark befahrenen Straßenstück appliziert. Für die Prüfung der Elastizität (Tiefung nach ERICHSEN, DIN 53156) wurden die Farben in einer Naßfilmstärke von 400 $\mu$m auf Eisenblech aufgebracht. Die Ergebnisse sind in der folgenden Tabelle 2 zusammengefaßt. Die Vergleichswerte beim Kugelfalltest und den Straßentests stammen von Prüfungen praktisch eingesetzter Materialien auf Lösungsmittelbasis. Wie sich aus der Tabelle ergibt, zeigen die erfindungsgemäßen Produkte auf Wasserbasis praxisgerechte Eigenschaften.

TABELLE 2

| Substrat | Asbestzement, bitumengetränkt | | | | | Eisenblech | Asphalt (Straße) | |
|---|---|---|---|---|---|---|---|---|
| Farbe aus Beispiel | Schichtstärke (trocken) µm | Trocknung (1) min | (2) min | Kugelfall- test (3) | Tiefung mm | Schichtstärke µm | Abrieb (4) | Verschmutzung (5) |
| 1 | 160 | 65 | 65 | 5000 | 1,8 | 200 | 85 | 12 |
| 2 | 140 | 70 | 70 | 9000 | 2,9 | 250 | 90 | 12 |
| 3 | 150 | 90 | 85 | 6000 | 1,7 | 200 | 90 | 12 |
| 4 | 150 | 95 | 95 | 12000 | 8,5 | 200 | 95 | 14 |
| 5 | 140 | 80 | 85 | 6000 | 3,5 | 220 | 90 | 12 |
| 6 | 140 | 80 | 80 | 7000 | 4,2 | 210 | 90 | 15 |
| 7 | 150 | 75 | 80 | 8000 | 6,2 | 200 | 85 | 14 |
| 8 | 150 | 70 | 70 | 10000 | 5,8 | 230 | 95 | 12 |
| Vergleich | | | | 5000 - 10000 | | | 90 - 95 | 12 - 15 |

Fußnoten zur Tabelle 2

(1)  Kleber : Zeit nach welcher ein Trocknungsgrad
4 nach DIN 53 150 erreicht ist

(2)  Durchtrocknung nach ASTM-D-711-75 mit Walze

(3)  Kugelfalltest nach DIN 53 154

(4)  Straßentest Abrieb: Vergleich nach 8 Monaten
Verkehrsbelastung. Die Zahl
gibt den Prozentsatz der noch
intakten Farbfläche an

(5)  Straßentest Verschmutzung: Vergleich nach 8 Monaten Verkehrsbelastung.
Wertung:
10 keine Verschmutzung
10-15 geringfügige Verschmutzung
schlechtester Wert 50

## Patentansprüche

1.  Bindemittel auf der Basis von Acrylatcopolymerdispersionen für Beschichtungsmaterialien, vorwiegend für mineralische oder bituminöse Untergründe, insbesonders für Straßenmarkierungsfarben, dadurch gekennzeichnet, daß die Copolymeren eine Monomerenzusammensetzung von
    (a) 40 bis 67 Gew.-% Ethylacrylat und n-Butylacrylat in einem Verhältnis von 3,5 : 1 bis 1 : 2,5,
    (b) 5 bis 20 Gew.-% Hydroxyalkylacrylate und/oder (Meth)acrylamid,
    (c) 3 bis 5 Gew.-% (Meth)acrylsäure,
    (d) 10 bis 15 Gew.-% Methylmethacrylat und/oder $C_1$-$C_{10}$-Alkylester der Malein- oder Fumarsäure,
    (e) 15 bis 30 Gew.-% mit den Monomeren (a) bis (d) copolymerisierbare Vinylmonomere, vorzugsweise Styrol,
    aufweisen, wobei die Summe der Prozentzahlen der Komponenten (a) bis (e) 100 ergeben muß und die Copolymeren eine berechnete Glasübergangstemperatur zwischen -20°C und +30°C, vorzugsweise zwischen -10°C und +20°C, haben.

2.  Bindemittel nach Anspruch 1, dadurch gekennzeichnet, daß die Copolymeren eine Monomerenzusammensetzung von
    15 - 25 Gew.-% Ethylacrylat,
    25 - 35 Gew.-% n-Butylacrylat,
    5 - 10 Gew.-% 2-Hydroxyethylacrylat und/oder Acrylamid
    3 - 5 Gew.-% Acrylsäure
    10 - 15 Gew.-% Methylmethacrylat und
    20 - 30 Gew.% Styrol
    aufweisen, wobei die Summe der Prozentzahlen der Komponenten 100 ergeben muß und die Copolymeren eine berechnete Glasübergangstemperatur zwischen 0 und +10°C aufweisen.

3. Verfahren zur Herstellung der Bindemittel nach den Ansprüchen 1 und 2, <u>dadurch gekennzeichnet</u>, daß man die Monomeren in den angegebenen Zusammensetzungen in Emulsion polymerisiert.

4. Verwendung der Bindemittel nach den Ansprüchen 1 und 2 zur Formulierung von Beschichtungsmitteln für mineralische und bituminöse Untergründe, insbesonders von Straßenmarkierungsfarben.

5. Verwendung der Bindemittel nach den Ansprüchen 1 und 2 zur Formulierung von Beschichtungsmitteln mit einem Pigment-Bindemittelverhältnis von 2 : 1 bis 10 : 1.

## Claims

1. Binders based on acrylate copolymer dispersions for coating materials, predominantly for mineral or bituminous substrates, especially for road-marking paints, <u>characterized</u> in that the copolymers have a monomer composition of
   (a) from 40 to 67 % by weight of ethyl acrylate and n-butyl acrylate in a ratio of from 3.5 : 1 to 1 : 2.5,
   (b) from 5 to 20 % by weight of hydroxyalkyl acrylates and/or (meth)acrylamide,
   (c) from 3 to 5 % by weight of (meth)acrylic acid,
   (d) from 10 to 15 % by weight of methyl methacrylate and/or $C_1$-$C_{10}$-alkyl esters of maleic or fumaric acid,
   (e) from 15 to 30 % by weight of vinyl monomers, preferably styrene, which can be copolymerized with the monomers (a) to (d),
   the sum of the percentages of components (a) to (e) necessarily adding to give 100 and the copolymers having a calculated glass transition temperature of between -20°C and +30°C, preferably between -10°C and +20°C.

2. Binders according to Claim 1, <u>characterized</u> in that the copolymers have a monomer composition of
   15 - 25 % by weight ethyl acrylate,
   25 - 35 % by weight n-butyl acrylate,
   5 - 10 % by weight 2-hydroxyethyl acrylate and/or acrylamide
   3 - 5 % by weight acrylic acid
   10 - 15 % by weight methyl methacrylate and
   20 - 30 % by weight styrene,
   the sum of the percentages of the components necessarily adding to give 100 and the copolymers having a calculated glass transition temperature of between 0 and +10°C.

3. Process for the preparation of the binders according to Claims 1 and 2, <u>characterized</u> in that the monomers are emulsion-polymerized in the compositions indicated.

4. Use of the binders according to Claims 1 and 2 for the formulation of coating compositions for mineral and bituminous substrates, especially of road-marking paints.

5. Use of the binders according to Claims 1 and 2 for the formulation of coating compositions having a pigment-binder ratio of from 2 : 1 to 10 : 1.

## Revendications

1. Liants à base de dispersions de copolymères d'acrylates pour des produits de revêtement, principalement pour des substrats minéraux ou bitumineux, en particulier pour des peintures de marquage des routes, caractérisés en ce que les copolymères ont une composition en monomères de
   (a) 40 à 67 % en masse d'acrylate d'éthyle et d'acrylate de n-butyle dans un rapport de 3,5:1 à 1:2,5
   (b) 5 à 20 % en masse d'acrylates d'hydroxyalkyle et/ou de (méth)acrylamide
   (c) 3 à 5 % en masse d'acide (méth)acrylique
   (d) 10 à 15 % en masse de méthacrylate de méthyle et/ou d'esters d'alkyle en $C_1$-$C_{10}$ de l'acide maléique ou fumarique

(e) 15 à 30 % en masse de monomères vinyliques copolymérisables avec les monomères (a) à (d), de préférence du styrène,

la somme des pourcentages des constituants (a) à (e) devant donner 100 et les copolymères ayant une température de transition vitreuse calculée comprise entre -20°C et +30°C, de préférence entre -10°C et +20°C.

2. Liants selon la revendication 1, caractérisés en ce que les copolymères ont une composition en monomères de

15 - 25 % en masse d'acrylate d'éthyle,

25 - 35 % en masse d'acrylate de n-butyle,

5 - 10 % en masse d'acrylate de 2-hydroxyéthyle et/ou d'acrylamide,

3 - 5 % en masse d'acide acrylique,

10 - 15 % en masse de méthacrylate de méthyle et

20 - 30 % en masse de styrène,

la somme des pourcentages des constituants devant donner 100 et les copolymères ayant une température de transition vitreuse calculée comprise entre 0 et +10°C.

3. Procédé de préparation des liants selon les revendications 1 et 2, caractérisé en ce que l'on polymérise en émulsion les monomères dans les compositions indiquées.

4. Utilisation des liants selon les revendications 1 et 2 pour la formulation de compositions de revêtement pour des substrats minéraux et bitumineux, en particulier de peintures pour le marquage des routes.

5. Utilisation des liants selon les revendications 1 et 2 pour la formulation de compositions de revêtement ayant un rapport du pigment au liant de 2:1 à 10:1.